# EUROPEAN PATENT APPLICATION

(11) **EP 4 706 385 A1**
(43) Date of publication of application: **11.03.2026**
(21) Application number: 25187124.0
(22) Date of filing: 03.07.2025
(51) Int. Cl.: A01K 27/00

(54) **IMPROVED LEASH**

(30) Priority: 05.09.2024 IT 202400019789
(71) Applicant: Paglioni, Angelo, 62021 Apiro MC (IT)
(72) Inventor: Paglioni, Angelo, 62021 Apiro MC (IT)
(74) Representative: Benetazzo, Flavia

(57) **Abstract**

A leash (100) comprises: a body (1), a cord (2), a winder (3), a blocking group (4) to block the rotation of the winder (3) in a first direction of rotation and comprising an element (40) movable between a rest position and an operating position, first activation means (5) to move the element (40) of the blocking group to the operating position and comprising a toothed wheel (50) and a lever (52), a reduction group (6) able to assume an operating position, in which the reduction group (6) transmit a rotation from a toothed wheel (32) of the winder to the toothed wheel (50) of the first activation means, and a rest position, in which the reduction group (6) does not transmit a rotation from the toothed wheel (32) of the winder to the toothed wheel (50) of the first activation means, and second activation means (7) for moving the reduction group (6) between the operating position and the rest position and vice versa; when the reduction group (6) is in the operating position, said toothed wheel (50) of the first activation means is connected to the reduction group (6), so as to push the lever (52) into rotation for moving the element (40) into the operating position; the blocking group (4) comprises return means (42) to bring the element (40) into the rest position, when the lever (52) of the first activation means does not push on the element (40).

## Description

The present patent application relates to an improved leash. The relevant field is that of pet products, particularly for dogs.

Leashes for dogs are known that comprise a body comprising an opening and a cord protruding from the opening of the body. The cord is intended to be attached to a dog collar.

Known leashes comprise a winder around which the cord is wound. The winder is configured to rotate in a first direction of rotation, to unwind the cord, and in a second direction of rotation, to rewind the cord onto the winder. The winder comprises a torsion spring. When the dog moves away from the leash, the dog causes the winder to rotate in the first direction of rotation, thereby loading the torsion spring. When the dog moves closer to the leash, the torsion spring discharges, causing the winder to rotate in the second direction of rotation.

Known leashes comprise a blocking group to block the rotation of the winder, thereby preventing the cord from being further unwound and stopping the dog from moving farther away. The blocking group comprises:
- a locking element hinged to the frame and able to rotate between a rest position, in which the element is distant from the winder, and an operating position, in which the element interferes with a tooth of the winder to prevent the rotation of the winder;
- an activation button which the user can press to rotate the locking element into the operating position;
- a spring connected to both the frame and the locking element, to rotate the locking element back into the rest position when the activation button is released, and to keep the locking element in the rest position.

When the activation button is pressed, the locking element is positioned in the operating position between two adjacent teeth of the winder, allowing the winder to rotate in both directions until the locking element abuts against one of the two teeth.

It should be noted that, when the winder is locked, the dog cannot move outside of a circle with a radius equal to the length of the cord, but is free to move inside that circle, approaching and moving away from the body of the leash.

Known leashes present a drawback due to the fact that, when the winder is locked and the dog moves inside the circle defined by the cord length, the cord is no longer under tension. This can lead to dangerous situations, as the dog is no longer controllable through the leash. For example, the dog might get tangled around a handler's or passerby's legs, causing them to fall, or might get tangled around street poles, or approach other animals, potentially leading to collisions.

It should be noted that, in order to bring the cord back under tension, the handler must release the activation button of the blocking group so that the locking element returns to the rest position and unlocks the winder, allowing the winder to rotate in the second direction of rotation. However, during the time the handler performs this unlocking operation, the aforementioned dangerous situations can occur. Furthermore, the handler might not immediately realize that the cord is no longer under tension. Therefore, the handler may not release the activation button in time to unlock the winder.

WO2004/105468 discloses a device comprising a housing with a handle and a leash wound around an internal winder.

The purpose of the present invention is to overcome the drawbacks of the known prior art, providing a leash that prevents dangerous situations by keeping the cord constantly under tension.

A further purpose is to provide a leash that is easy to use, practical, comfortable, cost-effective, and simple to manufacture.

These purposes are achieved in accordance with the invention having the features listed in the appended independent claim 1.

Advantageous embodiments appear from the dependent claims. The leash according to the invention is defined by claim 1.

The advantages of the leash according to the invention are evident, as thanks to the first activation means and the reduction group, the cord can be kept constantly under tension, even when the activation button is pressed and the animal moves towards the leash. In this way, dangerous situations for the animal, the handler, and third parties can be avoided.

For greater clarity, the description of the leash according to the invention continues with reference to the attached drawings, which have a non-limiting illustrative purpose, wherein:
- Fig. 1 is a side view of the leash according to the invention, with the retractor unlocked and with one body wall removed;
- Fig. 2 is like Fig. 1, but shows the leash with the retractor locked and activated;
- Fig. 3 is like Fig. 1, but shows the leash with the retractor locked and deactivated.

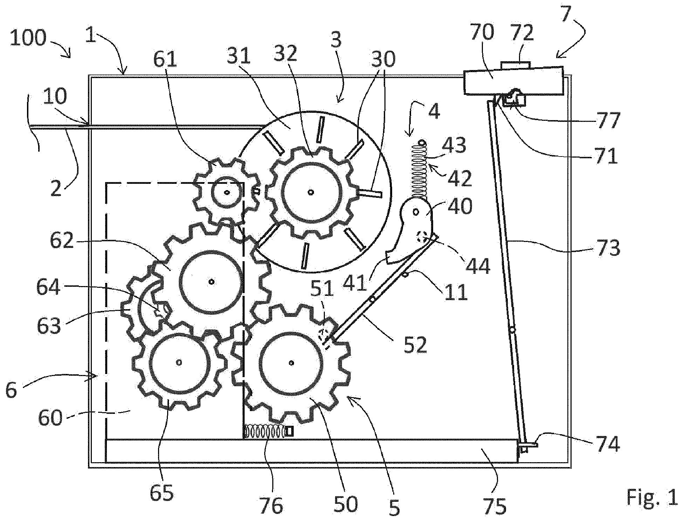

With reference to Figs. 1 to 3, a leash according to the invention is described, indicated overall by the reference number 100.

The leash (100) comprises:
- a body (1), usually made of plastic, comprising an opening (10);
- a cord (2) arranged inside the body (1) and comprising a first end (not shown in the figures) protruding from the opening (10) of the body and suitable for being connected to an animal;
- a winder (3) around which the cord (2) is wound.

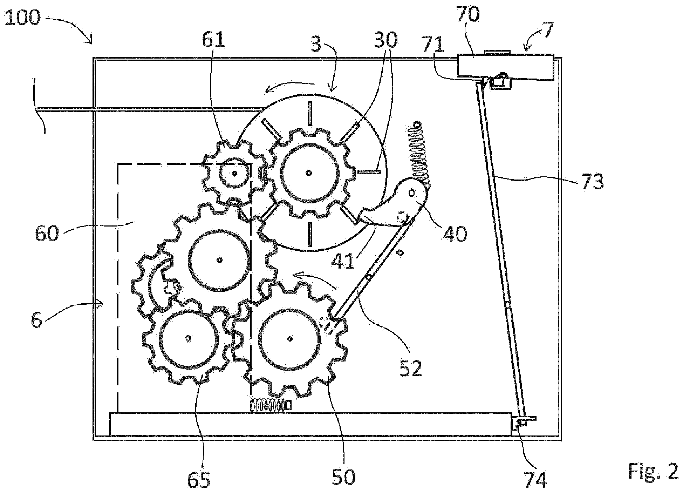

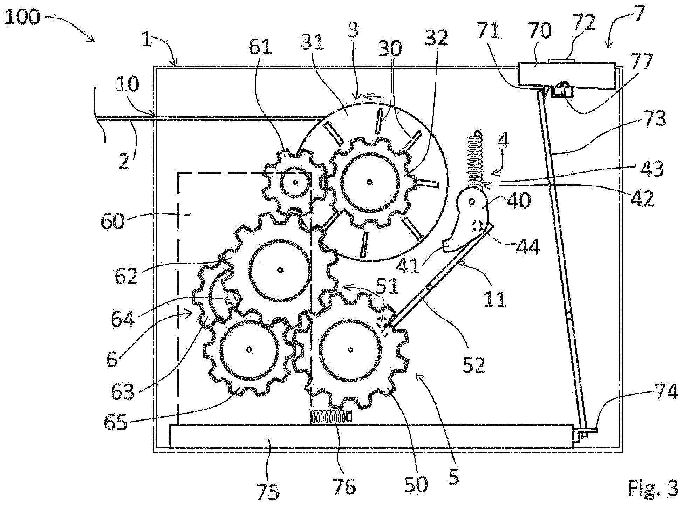

The winder (3) is arranged in the body (1) and is able to rotate in a first direction of rotation (shown in Figs. 2 and 3 by an arrow), in which the cord (2) is able to unwind from the winder (3), and in a second direction of rotation, opposite to the first direction of rotation, in which the cord (2) is able to roll up on the winder (3). The winder (3) comprises a torsion spring (not shown in the Figures) for rotating the winder (3) in the second direction of rotation.

The winder (3) is spool-shaped and comprises a rotating body around a central axis, hinged to the body (1). The body of the winder (3) comprises two external disks (31) and a cylinder (not visible in the figure), positioned between the two external disks (31) and having a diameter smaller than that of the external disks. The cord (2) is able to be wound around the cylinder. The winder (3) comprises a plurality of teeth (30) spaced apart from each other and protruding from an external face of at least one of the external disks (31) of the body of the winder. Optionally, the teeth (30) are disposed in a radial direction and are proximal to an edge of said at least one external disk (31) of the body of the winder.

The winder (3) comprises a toothed wheel (32) protruding from an external disk (31) of the body of the winder. The toothed wheel (32) is coaxial with the body of the winder (3) and rotationally integral with the body of the winder (3).

The leash (100) comprises a blocking group (4) to block the rotation of the winder (3) in the first direction of rotation. The blocking group (4) is arranged in the body (1) and comprises:
- an element (40) comprising a free end (41); the element (40) is able to move between a rest position (Figs. 1 and 3), in which the free end (41) is distant from the teeth (30) of the winder, and an operating position (Fig. 2), in which the free end (41) is able to interfere with the teeth (30) of the winder, thereby blocking the rotation of the winder (3) in the first direction of rotation; in this way, the cord (2) is prevented from unwinding from the body (1); advantageously, the element (40) is hinged to the body (1), so as to rotate between the rest position and the operating position; a rotation axis of the element (40) is parallel to the rotation axis of the winder (3);
- a return means (42) connected to the element (40) and the body (1) to bring the element (40) into the rest position; the return means (42) comprises a spring (43) comprising a first end connected to the body (1) and a second end connected to the element (40), so as to wind up (Fig. 2) when the element (40) passes into the operating position, and to unwind to return the element (40) to the rest position.

The leash (100) comprises a first activation means (5) arranged in the body (1) and able to move the element (40) of the blocking group to the operating position. The first activation means (5) comprises:
- a toothed wheel (50) hinged to the body (1); a rotation axis of the toothed wheel (50) of the first activation means is parallel to the rotation axis of the element (40) and the winder (3);
- a pin (51) protruding from the toothed wheel (50) of the first activation means; advantageously, the pin (51) protrudes from one face of the toothed wheel (50) of the first activation means and is arranged proximal to an edge of said toothed wheel (50);
- a lever (52) hinged to the body (1) and comprising a first end able to interfere with the pin (51) and a second end able to interfere with an abutment portion (44) of the element (40).

Optionally, the element (40) comprises two parallel walls connected by pins. One of the pins is the abutment portion (44).

The toothed wheel (50) of the first activation means is able to rotate in a first direction of rotation (shown in Figs. 2 and 3 by an arrow), in which the pin (51) is suitable for not pushing the lever (52) into rotation, and in a second direction of rotation, in which the pin (51) is suitable for pushing the lever (52) in rotation, so that the lever (52) moves the element (40) into the operating position.

The return means (42) of the blocking group is able to move the element (40) into the rest position when the lever (52) of the first activation means does not push on the element (40), that is, when the toothed wheel (50) of the first activation means rotates in the first direction of rotation. More precisely, the spring (43) of the return means unwinds, when the toothed wheel (50) of the first activation means rotates in the first direction of rotation, to move the element (40) into the rest position.

The leash (100) comprises a reduction group (6) configured to cooperate with the toothed wheel (32) of the winder and the toothed wheel (50) of the first activation means to rotate the toothed wheel (50) of the first activation means when the winder (3) rotates and to reduce the maximum number of turns of the winder (3) in both direction of rotations to less than one complete turns of the toothed wheel (50) of the first activation means.

The reduction group (6) is arranged in the body (1) and comprises a frame (60) and a plurality of gears, at least one of which is connected to the frame (60). Optionally, all the plurality of gears are mounted on the frame (60). Said plurality of gears are suitable to engage with the toothed wheel (32) of the winder and the toothed wheel (50) of the first activation means and comprises:
- a first toothed wheel (61) hinged to the frame (60) of the reduction group and suitable to meshing with the toothed wheel (32) of the winder;
- a second toothed wheel (62) hinged to the frame (60) of the reduction group and meshing with the first toothed wheel (61);
- a third toothed wheel (not visible) coaxial with the second toothed wheel (62) and integral with the second toothed wheel (62); the second toothed wheel (62) and the third toothed wheel are in a single piece and form a double gear;
- a fourth toothed wheel (63) hinged to the frame (60) of the reduction group and meshing with the third toothed wheel;
- a fifth toothed wheel (64) coaxial with the fourth toothed wheel (63) and integral with the fourth toothed wheel (63); the fourth toothed wheel (63) and the fifth toothed wheel (64) are in a single piece and form a double gear;
- a sixth toothed wheel (65) hinged to the frame (60) of the reduction group, meshing with the fifth toothed wheel (64) and capable of meshing with the toothed wheel (50) of the first activation means.

The toothed wheels (61, 62, 63, 64, 65) of the reduction group have a diameter and number of teeth such that the maximum number of turns of the winder (3) in one of the directions of rotation corresponds to less than one complete turns of the toothed wheel (50) of the first activation means.

For example, the toothed wheel (32) of the winder has 30 teeth, the first toothed wheel (61) has 30 teeth (the first toothed wheel (61) transmits rotation from the toothed wheel (32) of the winder to the second toothed wheel (62) without changing the number of turns), the second toothed wheel (62) has 60 teeth, the third toothed wheel has 10 teeth, the fourth toothed wheel (63) has 30 teeth, the fifth toothed wheel (64) has 10 teeth, the sixth toothed wheel (65) has 30 teeth, and the toothed wheel (50) of the first activation means has 60 teeth.

The reduction group (6) is mounted movably with respect to the winder (3) and the toothed wheel (50) of the first activation means, so as to assume:
- an operating position (Figs. 2 and 3), in which the reduction group (6) is in contact with the toothed wheel (32) of the winder and the toothed wheel (50) of the first activation means, so as to transmit a rotation from the toothed wheel (32) of the winder to the toothed wheel (50) of the first activation means and reduce the maximum number of turns of the winder (3) in both directions of rotation to less than one complete turn of the toothed wheel (50) of the first activation means, and
- a rest position, in which the reduction group (6) is distal from the toothed wheel (32) of the winder and the toothed wheel (50) of the first activation means.

More precisely, the frame (60) of the reduction group is connected to the second activation means (7), in order to be movable.

In particular, when the reduction group (6) is in the operating position, the first toothed wheel (61) of the reduction group is able to mesh with the toothed wheel (32) of the winder and the sixth toothed wheel (65) is able to mesh with the toothed wheel (50) of the first activation means. When the reduction group (6) is in the rest position, the first toothed wheel (61) of the reduction group is distal from the toothed wheel (32) of the winder and the sixth toothed wheel (65) of the reduction group is distal from the toothed wheel (50) of the first activation means.

When the reduction group (6) is in the operating position, the toothed wheel (50) of the first activation means is connected to said reduction group (6), so as to rotate in the first direction of rotation or in the second direction of rotation, when the winder (3) rotates. Optionally, the reduction group (6) in the operating position is able to move in rotation the toothed wheel (50) of the first activation means in the first direction of rotation, when the winder (3) rotates in the second direction of rotation, and in the second direction of rotation when the winder (3) rotates in the first direction of rotation. The first activation means (5) comprises a torsion spring (not shown) to rotate the toothed wheel (50) of the first activation means in the first direction of rotation when the reduction group (6) is moved to the rest position.

The leash (100) comprises a second activation means (7) suitable for moving the reduction group (6) between the operating position and rest position, and vice versa. More precisely, the second activation means (7) are able to slide the reduction group (6) between the operating position and rest position, and vice versa.

The second activation means (7) comprises:
- an activation button (70) adapted to be pushed by a user to move the reduction group (6) to the operating position; the activation button (70) comprises a tooth (71) arranged inside the body (1);
- a locking button (72) adapted to be activated to lock the activation button (70) in the pushed position; the locking button (72) has a slot (77) arranged in the body (1) and suitable to accommodate a pin of the body (1); the slot (77) comprises a narrowed portion that holds the pin of the body (1) when the locking button (72) is activated;
- a lever (73) hinged to the body (1); the lever (73) has a first end cooperating with the tooth (71) of the activation button and a second end; the lever (73) is suitable for being moved in rotation by the tooth (71) of the activation button when the activation button (70) is pushed;
- a slide (74) to which the reduction group (6), in particular the frame (60) of the reduction group, is fixed; the slide (74) is connected to the second end of the lever (73) of the second activation means so that, when the activation button (70) is pushed, said lever (73) rotates and moves the slide (74) in sliding, so that the reduction group (6) slides towards the operating position;
- a guide (75) fixed to the body (1) and in which the slide (74) slides;
- a return means (76) comprising a spring comprising a first end connected to the reduction group (6), in particular to the frame (60) of the reduction group, and a second end connected to the body (1), so as to slide the slide (74) back into the rest position.

When the activation button (70) is not pressed (Fig. 1), if the animal moves away from the leash (100), said animal pulls the cord (2), causing the winder (3) to rotate in the first direction of rotation. The torsion spring of the winder (3) is wound. When the animal moves back toward the leash, the torsion spring unwinds, rotating the winder (3) in the second direction of rotation.

Pressing the activation button (70), the tooth (71) of the activation button rotates the lever (73) of the second activation means, in order that the second end of said lever (73) causes the slide (74) and the reduction group (6) to slide in the operating position (Figs. 2 and 3). In this way, when the winder (3) rotates in the first direction of rotation, the plurality of gears of the reduction group (6) transmits rotation to the toothed wheel (50) of the first activation means, that rotates in the second direction of rotation. Consequently, the second end of the lever (52) of the first activation means rotates the element (40) of the blocking group to the operating position (Fig. 2), in which the free end of the element (40) interferes with the teeth (30) of the winder. In this way, the cord (2) is blocked from unwinding. Thus, as long as the activation button (70) is activated, the maximum length of the cord (2) extending outside the body (1) corresponds to the length of the cord (2) at the moment that the element (40) interferes with the teeth (30) of the winder.

With the activation button (70) pressed, when the animal returns toward the leash (100), the winder (3) rotates in the second direction due to torsion spring of the winder. Simultaneously, the plurality of gear of the reduction group (6) rotates the toothed wheel (50) of the first activation means in the first direction of rotation, so the lever (52) of the first activation means does not push against the element (40). The spring (43) of the return means of the blocking group rotates the element (40) of the blocking group to the rest position (Fig. 3), so that the free end (41) of the element of the blocking group does not interfere with the teeth (30) of the winder. The element (40) of the blocking group rotates the lever (52) of the first activation means until said lever (52) contacts a stop (11) of the body. The cord (2) is free to rewind onto the winder (3), remaining always under tension.

By rotating the winder (3) again in the first direction of rotation, after the winder (3) has rotated in the second direction of rotation with the activation button (70) pressed, the reduction group (6) transmits the rotation to the toothed wheel (50) of the first activation means, which rotates in the second direction of rotation. At the maximum extension of the cord (2), previously set, the pin (51) of the first activation means pushes the first end of the lever (52) of the first activation means into rotation, so that the lever (52) of the first activation means pushes the element (40) into the operating position (Fig. 2). In this way, the element (40) of the blocking group interferes with the teeth (30) of the winder.

By releasing the activation button (70), the tooth (71) of the activation button no longer pushes on the lever (73) of the second activation means. The spring of the return means (76) of the second activation means moves in sliding the slide (74) of the second activation means and the frame (60) of the reduction group towards the rest position (Fig. 1). In this manner, the reduction group (6) moves away from the winder (3) and from the toothed wheel (50) of the first activation means. The torsion spring of the first activation means causes the toothed wheel (50) of the first activation means to rotate in the first direction of rotation, such that the pin (51) does not push on the lever (52) of the first activation means. The winder (3) is thus free to rotate in both the first and second direction of rotations.

The advantages of the leash according to the invention are evident, as thanks to the first activation means and the reduction group, the cord can be kept constantly under tension, even when the activation button is pressed and the animal moves towards the leash. In this way, dangerous situations for the animal, the handler, and third parties can be avoided. Furthermore, the leash (100) is easy to use, practical, and convenient.

Although not shown in the figures, the element (40) can be mounted so as to slide relative to the body (1). Also, although not shown in the figures, the gears of the reduction group (6) may be of a different type and/or have a different number of toothed wheels or a different number of teeth on the toothed wheels or a different movement with respect of the winder and the first activation means. Furthermore, when the reduction group is in the rest position, it is sufficient for two toothed wheels, which interfere with each other in the operative position, not to interfere with each other, so as not to transmit motion from the toothed wheel of the winder to the toothed wheel of the first activation means. Therefore, alternatively, only one or only a part of the toothed wheels of the plurality of gears of the reduction group are able to move between the rest position and the operating position.

**It** should be noted that, when the activation button is pressed and the winder rotates in the first direction of rotation, the toothed wheel of the first activation means rotates in the second direction of rotation, thereby moving the element into the operating position. Although, in the drawings, the first direction of rotation of the winder and the second direction of rotation of the toothed wheel of the first activation means are opposite to each other, alternatively, the first direction of rotation of the winder may be opposite to the first direction of rotation of the toothed wheel of the first activation means and the second direction of rotation of the winder may be opposite to the second direction of rotation of the toothed wheel of the first activation means.

Modifications or variations of detail within the scope of a person skilled in the art may be made to the present embodiment of the invention, which, however, fall within the scope of the invention as expressed in the appended claims.

## Claims

1. Leash (100) comprising:
- a body (1);
- a cord (2) arranged in the body (1) and comprising a first end protruding from an opening (10) of the body and suitable for being connected to an animal;
- a winder (3) around which the cord (2) is wound; said winder (3) being arranged in the body (1) and being able to rotate in a first direction of rotation, in which the cord (2) is able to unwind from the winder (3), and in a second direction of rotation, in which the cord (2) is able to roll up on the winder (3); said winder (3) comprising a plurality of teeth (30) spaced apart from each other and a toothed wheel (32) integral with a body of the winder (3);
- a blocking group (4) to block the rotation of the winder (3) in the first direction of rotation; said blocking group (4) being arranged in the body (1) and comprising an element (40) comprising a free end (41); said element (40) being able to move between a rest position, in which the free end (41) is distal from the teeth (30) of the winder, and an operating position, in which the free end (41) is able to interfere with the teeth (30) of the winder;
- first activation means (5) arranged in the body (1) and able to move the element (40) of the blocking group to the operating position; said first activation means (5) comprising a toothed wheel (50) hinged to the body (1), a pin (51) protruding from the toothed wheel (50) of the first activation means and a lever (52) hinged to the body (1); said lever (52) comprising a first end able to interfere with the pin (51) and a second end able to interfere with the element (40);
- a reduction group (6) arranged in the body (1) and mounted movably with respect to the winder (3) and to the toothed wheel (50) of the first activation means, so as to assume an operating position, in which the reduction group (6) is in contact with the toothed wheel (32) of the winder and with the toothed wheel (50) of the first activation means, so as to transmit a rotation from the toothed wheel (32) of the winder to the toothed wheel (50) of the first activation means, and a rest position, in which the reduction group (6) does not transmit a rotation from the toothed wheel (32) of the winder to the toothed wheel (50) of the first activation means;
- second activation means (7) suitable for moving the reduction group (6) between the operating position and the rest position and vice versa;
wherein
when the reduction group (6) is in the operating position, said toothed wheel (50) of the first activation means is connected to the reduction group (6), so as to rotate in a first direction of rotation, in which the pin (51) is suitable for not pushing the lever (52) into rotation, and in a second direction of rotation, in which the pin (51) is suitable for pushing the lever (52) into rotation so that the lever (52) moves the element (40) into the operating position;
said blocking group (4) comprises return means (42) connected to the element (40) and to the body (1) to bring the element (40) into the rest position, when the lever (52) of the first activation means does not push on the element (40).

2. Leash (100) according to claim 1, wherein, when the reduction group (6) is in the operating position, the reduction group (6) is in contact with the toothed wheel (32) of the winder and with the toothed wheel (50) of the first activation means, so as to reduce the maximum number of turns of the winder (3) in both directions of rotation to less than one complete turn of the toothed wheel (50) of the first activation means.

3. Leash (100) according to claim 1 or 2, wherein the reduction group (6) comprises a frame (60) and a plurality of gears, at least one of which is connected to the frame (60); said plurality of gears are suitable to engage with the toothed wheel (32) of the winder and the toothed wheel (50) of the first activation means.

4. Leash (100) according to claim 3, wherein the frame (60) of the reduction group is connected to the second activation means (7), in order to be movable.

5. Leash (100) according to claim 3 or 4, wherein the plurality of gears comprises:
- a first toothed wheel (61) hinged to the frame (60) of the reduction group and suitable for meshing with the toothed wheel (32) of the winder, when the reduction group (6) is in the operating position;
- a second toothed wheel (62) hinged to the frame (60) of the reduction group and meshing with the first toothed wheel (61);
- a third toothed wheel coaxial with the second toothed wheel (62) and integral with the second toothed wheel (62);
- a fourth toothed wheel (63) hinged to the frame (60) of the reduction group and meshing with the third toothed wheel;
- a fifth toothed wheel (64) coaxial with the fourth toothed wheel (63) and integral with the fourth toothed wheel (63);
- a sixth toothed wheel (65) hinged to the frame (60) of the reduction group, meshing with the fifth toothed wheel (64) and capable of meshing with the toothed wheel (50) of the first activation means, when the reduction group (6) is in the operating position.

6. Leash (100) according to any one of the preceding claims, wherein the second activation means (7) comprise:
- an activation button (70) adapted to be pushed by a user to move the reduction group (6) into the operating position; said activation button (70) comprising a tooth (71) arranged in the body (1);
- a lever (73) hinged to the body (1); said lever (73) comprising a first end cooperating with the tooth (71) of the activation button and a second end; said lever (73) being suitable for being moved in rotation by the tooth (71) of the activation button when the activation button (70) is pushed;
- a slide (74) to which the reduction group (6) is fixed; said slide (74) being connected to the second end of the lever (73) of the second activation means, so that, when the activation button (70) is pushed, said lever (73) rotates and moves the slide (74) in sliding, so that the reduction group (6) slides towards the operating position;
- a guide (75) fixed to the body (1) and within which the slide (74) slides;
- return means (76) comprising a spring comprising a first end connected to the reduction group (6) and a second end connected to the body (1), so as to slide the slide (74) into the rest position.

7. Leash (100) according to any one of the preceding claims, wherein the return means (42) of the blocking group comprise a spring (43) comprising a first end connected to the body (1) and a second end connected to the element (40), so as to wind up when the element (40) passes into the operating position, and to unwind when the toothed wheel (50) of the first activation means rotates in the first direction of rotation, to move the element (40) into the rest position.

8. Leash (100) according to any one of the preceding claims, wherein the pin (51) of the first activation means protrudes from a face of the toothed wheel (50) of the first activation means and is arranged proximal to an edge of said toothed wheel (50).

9. Leash (100) according to any one of the preceding claims, wherein said first activation means (5) comprise a torsion spring to rotate the toothed wheel (50) of the first activation means in the first direction of rotation, when the reduction group (6) is moved to the rest position.

10. Leash (100) according to any one of the preceding claims, wherein said toothed wheel (32) of the winder protrudes from an external disk (31) of the body of the winder and is coaxial with the body of the winder (3).

11. Leash (100) according to any one of the preceding claims, wherein said element (40) is hinged to the body (1) so as to rotate between the operating position and the rest position.

12. Leash (100) according to any one of the preceding claims, wherein said teeth (30) of the winder protrude from an external face of at least one external disk (31) of the body of the winder; said teeth (30) being disposed in a radial direction and being proximal to an edge of said at least one external disk (31) of the body of the winder; said winder (3) comprising a torsion spring for rotating the winder (3) in the second direction of rotation.
